# EUROPÄISCHE PATENTSCHRIFT

(11) **EP 1 582 684 B1**
(45) Veröffentlichungstag und Bekanntmachung des Hinweises auf die Patenterteilung: **23.07.2008**
(21) Anmeldenummer: 05005461.8
(22) Anmeldetag: 14.03.2005
(51) Int. Cl.: E06B 1/60, F16B 35/06

(54) **Schraube zur Verankerung eines mit einem Metallprofil verstärkten Kunststoffhohlprofils an einem Unterbau**
Screw for fixing hollow plastic section members with metal profiled reinforcements to a substructure
Vis pour la fixation de profilés creux en matière plastique renforcés par des profilés métalliques sur une structure de support

(30) Priorität: 29.03.2004 DE 202004004893 U
(43) Veröffentlichungstag der Anmeldung: 05.10.2005
(73) Patentinhaber: SFS intec Holding AG, 9435 Heerbrugg (CH)
(72) Erfinder: Mallebay, Lionel, 26120 Montelier (FR); Rouvier, André, 26320 St Marcel les Valence (FR); Rigollier, Hervé, 26120 Chabeuil (FR); Puiselvert, Marc, 26800 Portes les Valence (FR); Meireles, José, 26200 Montélimar (FR); Comoth, Marc, 26290 Donzere (FR)

(56) Entgegenhaltungen:
- EP-A- 0 292 742
- DE-A1- 3 225 393
- DE-U1- 20 018 425
- US-A- 3 224 152
- US-A- 3 859 764
- US-A- 6 042 314

## Beschreibung

Die Erfindung betrifft eine Schraube zur Verankerung eines mit einem Metallprofil verstärkten Kunststoffhohlprofils an einem Unterbau, welche einen Schaft mit einem an dessen Einschraubendbereich ausgebildeten Gewinde und einem am anderen Ende ausgebildeten Kopf mit einem Werkzeugangriff aufweist, wobei mit Abstand von der Unterseite des Schraubenkopfes ein Anschlagbund ausgebildet ist.

Solche Schrauben werden insbesondere bei der Verankerung von aus Hohlprofilen gebildeten Fensterrahmen am Unterbau und somit an der Begrenzung der Wandöffnung eingesetzt. Ein Problem ergibt sich jedoch dadurch, dass in der Regel wohl ein festes Anschrauben (Verankern) ermöglicht wird, dass aber praktisch keine Verstellmöglichkeiten vorhanden sind. Beim Einsetzen, eines Fensterrahmens oder eines Türrahmens in eine Wandöffnung ist es aber von Vorteil, wenn Einstellmöglichkeiten nach dem Eindrehen der Schrauben gegeben sind, um den Rahmen exakt einstellen zu können.

Bei einem bekannten Befestigungsanker für ein Bauelement (DE-U-29508741) sind mehrere mit axialem Abstand zueinander auf einem Schaft ausgebildete Gewindebereiche vorgesehen, wobei zwischen diesen Gewindebereichen gewindefreie Abschnitte vorgesehen sind. Um mit einem solchen Befestigungsanker eine Verstellung des Bauelementes (Rahmens) durchführen zu können, muss daher dieser Befestigungsanker mit mehreren Umdrehungen herausgedreht werden, bis die Gewindebereiche des Schaftes nicht mehr mit den Stegen eines das Bauelement bildenden Profils im Eingriff stehen. Nun kann das Bauelement in Achsrichtung des Befestigungsankers auf den gewindefreien Abschnitten verschoben werden. Eine neuerliche Fixierung des Bauelementes gegenüber dem Untergrund ist erst wieder möglich, wenn die Gewindebereiche wieder im Bauelement im Eingriff sind. Es muss daher für eine Feineinstellung unter Umständen mehrfach der Befestigungsanker mit mehreren Umdrehungen gelöst und mit mehreren Umdrehungen wieder eingeschraubt werden, bis die endgültige Einstellung des Bauelementes erreicht ist.

Ferner ist eine Schraube bekannt (DE-U-20018425), welche mit Abstand von der Unterseite des Schraubenkopfes einen Anschlagbund und an diesen Anschlagbund anschliessend mehrere mit axialem Abstand aufeinander folgende, bundartige Stege aufweist. Eine solche Schraube ist gut geeignet für die Befestigung von aus Kunststoff gebildeten Hohlprofilen an einem Untergrund.

Die Erfindung hat sich zur Aufgabe gestellt, eine Schraube der eingangs genannten Art so auszubilden, dass ein mit einem Metallprofil verstärktes Kunststoffhohlprofile einwandfrei gegenüber einer Wandung oder einem anderen Untergrund fixiert werden kann und dass trotzdem unmittelbar und direkt eine Verstellmöglichkeit für den aus einem Kunststoffhohlprofil gebildeten Rahmen bei in den Untergrund bereits eingedrehten Schrauben gegeben ist.

Dies gelingt erfindungsgemäss dadurch, dass der Abstand des Anschlagbundes von der Unterseite des Schraubenkopfes zumindest annähernd der Dicke einer aufzunehmenden Profilwandung des Kunststoffhohlprofils entspricht, und dass ein zwischen dem mit einem Gewinde versehenen Abschnitt des Schaftes und dem Anschlagbund verbleibender Bereich im Wesentlichen zylindrisch ausgeführt ist und einen Durchmesser grösser als der Kerndurchmesser des mit einem Gewinde versehenden Schaftes aufweist, wobei dieser Bereich des Schaftes in den Bohrungen der folgenden Wandungen des Metallprofils und/oder des Kunststoffhohlprofils in einem Passsitz eingreifen.

Dadurch wird die Möglichkeit geschaffen, dass die erste Profilwandung zwischen dem Schraubenkopf und dem Anschlagbund eingreift. Die weiteren Wandungen des Metallprofils und/oder des Kunststoffhohlprofils werden exakt ausgerichtet zur Schraube in ihrer Stellung gehalten. Nun kann aber trotzdem durch Drehen der Schraube entgegen dem Uhrzeigersinn eine Verstellung des Profils erreicht werden, weil eben die erste Profilwandung und die Schraube in Achsrichtung der Schraube in Wirkverbindung miteinander stehen.

Ferner wird vorgeschlagen, dass der Anschlagbund aus wenigstens zwei Kegelabschnittkörpern gebildet ist, wobei der in Richtung zum Schraubenkopf weisende Kegelabschnittkörper einen Winkel grösser als 90° und der in Richtung zum Schraubenende sich verjüngende Kegelabschnittkörper einen Winkel kleiner als 90° aufweist. Dadurch kann der Anschlagbund in die bereits in der entsprechenden Wandung des Hohlprofils vorhandene Bohrung eindringen und diese leicht aufweiten. Nach Überschreiten des im Durchmesser grössten Bereiches des Anschlagbundes wird die Bohrungswandung wieder etwas entlastet, so dass diese Wandung des Hohlprofils zwischen den Anschlagbund und den Kopf der Schraube einrasten kann. Infolge des wesentlich stumpferen Winkels des Kegelabschnittkörpers an der dem Kopf zuwandten Seite des Anschlagbundes ist die Schraube in dieser Lage bezüglich des Hohlprofils fixiert. Durch Verdrehen der Schraube in einem noch so kleinen Verdrehwinkel wird somit eine Verstellung des Hohlprofils in Achsrichtung der Schraube bewirkt.

Eine vorteilhafte Ausgestaltung liegt darin, dass der in Richtung zum Schraubenkopf weisende Kegelabschnittkörper des Anschlagbundes einen Winkel von etwa 120° und der in Richtung zum Schraubenende sich verjüngende Kegelabschnittkörper des Anschlagbundes einen Winkel von etwa 70° aufweist. Das Eindringen des Anschlagbundes und die anschliessende Lagefixierung zwischen Hohlprofil und Schraube ist dadurch optimal gelöst.

Eine besondere Ausgestaltung liegt darin, dass ein zwischen dem Schraubenkopf und dem Anschlagbund gebildeter Einstich im Durchmesser kleiner ist als der Durchmesser des auf den Anschlagbund folgenden Bereiches. Damit ist eine geringfügige Bewegung zwischen Kunststoffhohlprofil und Schraube möglich, wogegen die Schraube und das Metallprofil zueinander passend fest und somit in Querrichtung unbeweglich bleiben.

Ein Ausführungsbeispiel sieht vor, dass der Anschlagbund als kurzer Gewindeabschnitt ausgebildet ist. Sobald sich der Anschlag durch die erste Profilwandung des Kunststoffhohlprofils hindurchgedreht hat, gelangt die Bohrungswandung in den Bereich zwischen Anschlagbund und Schraubenkopf und die Schraube kann daher frei gegenüber den Profil verdreht werden.

Eine andere Variante sieht vor, dass der Anschlagbund von einem in eine Nut eingesetzten Ring gebildet ist. Bei dieser Variante sind wohl neben der Fertigung der Schraube noch Nacharbeiten bei der Herstellung der Nut sowie Montagearbeiten für den Ring durchzuführen, wobei jedoch der Umformvorgang für die Herstellung der Schraube einfacher wird.

Damit Toleranzen bei den eingesetzten Metallprofilen und bezüglich deren Lage im Kunststoffhohlprofil ausgeglichen werden können, ist es vorteilhaft, wenn zwischen dem Anschlagbund und dem anschliessenden zylindrischen Bereich des Schaftes ein weiterer Einstich vorgesehen ist.

Damit es möglich ist, nur einen auf den Gewindebereich angepassten Abschnitt teilweise noch in den Untergrund hineinragen zu lassen, der also auf das Gewinde folgend keine wesentlichen Widerstände bei Eindrehen bewirkt, ist vorgesehen, dass der zylindrische Bereich des Schaftes zwei Abschnitte verschiedenen Durchmessers aufweist, wobei der Abschnitt mit dem grösseren Durchmesser auf den Anschlagbund folgt und der Abschnitt mit dem kleineren Durchmesser am Übergang zu dem mit dem Gewinde versehenen Abschnitt vorgesehen ist.

Ein weiteres Ausführungsbeispiel sieht vor, dass der Anschlagbund von einem kragenartigen Bund einer auf den Schaft der Schraube aufgesetzten Hülse gebildet ist. Dadurch kann durch verschieden konstruktive Gestaltung eines Zusatzteiles wie der Hülse eine Anpassung an praktisch alle Spezialprofile geschaffen werden.

Dabei wird vorgeschlagen, dass die Hülse einen durchgehenden Längsschlitz zum federbelasteten Aufstecken derselben auf die Schraube aufweist. In diesem Zusammenhang ist vorgesehen, dass die Hülse aus Kunststoff gefertigt ist. Gerade bei einem solchen Werkstoff ist es dann zusätzlich möglich, besondere Vorkehrungen zu treffen. So ist es denkbar, dass die Hülse an ihrer Aussenoberfläche gerippt oder aufgerauht ausgebildet ist.

Auch für diese konstruktive Gestaltung ist ein Anschlagbund in Form des Bundes der Hülse gegeben. An der Schraube sind aber insofern zusätzliche Massnahmen vorzusehen, indem die Hülse mit ihrem dem kragenartigen Bund abgewandten Ende auf einem nahe dem Beginn des Gewindeabschnittes ausgebildeten Bund abgestützt ist. Es ist also in einem solchen Fall eine zusätzliche Umformarbeit an der Schraube erforderlich.

In vorteilhafter Ausgestaltung ist ferner vorgesehen, dass der Gewindeabschnitt mit einem Holzschraubengewinde ausgebildet ist. Dadurch kann die erfindungsgemässe Schraube sowohl in einen festen Untergrund aus Holz oder aber in Zusammenwirken mit einem Dübel eingedreht werden.

Beim Einsatz einer Befestigung mit Dübel wird in vorteilhafter Weise vorgesehen, dass der Aussendurchmesser des Dübels annähernd dem Durchmesser des im Wesentlichen zylindrisch ausgeführten Bereiches des Schaftes bzw. des Abschnittes mit dem grösseren Durchmesser dieses Bereiches angepasst ist. Dadurch kann in einem vorgebohrten Loch im Kunststoffhohlprofil durch dieses und das verstärkende Metallprofil die Schraube samt Dübel eingeschoben werden.

In konstruktiver Hinsicht ist eine einfache Ausgestaltung darin zu sehen, wenn, dass bei unterschiedlich langen Schrauben die Gewindeabschnitte jeweils gleich lang ausgeführt sind und der zylindrische Bereich des Schaftes unterschiedliche Längen aufweist. So ist in einfacher Weise eine Anpassung an diverse Profilvarianten möglich.

Weitere erfindungsgemässe Merkmale und besondere Vorteile werden in der nachstehenden Beschreibung anhand der Zeichnungen noch näher erläutert. Es zeigen:
Fig. 1 einen Schnitt durch ein mit einem Metallprofil verstärktes Kunststoffhohlprofil, welches durch eine Schraube an einem Stockrahmen befestigt ist;
die Fig. 2 bis 4 Schrauben, wie sie beim Beispiel nach der Fig. 1 eingesetzt worden sind, wobei verschieden lange Ausführungen dargestellt sind;
die Fig. 5, 6 sowie 7 und 8 weitere Ausführungsbeispiele der Schrauben und der Gestaltung des Anschlagbundes;
Fig. 9 eine weiteres Ausführungsbeispiel einer Schraube und der Gestaltung des Anschlagbundes als Hülse, wobei die Hülse in Fig. 10 in einem Längsschnitt und in Fig. 11 in Draufsicht dargestellt ist;
Fig. 12 einen Schnitt durch ein mit einem Metallprofil verstärktes Kunststoffhohlprofil, welches durch eine Schraube in Zusammenwirken mit einem Dübel an einem Mauerwerk oder einer Betonwand befestigt ist;
Fig. 13 eine im Zusammenhang mit der Darstellung in Fig. 12 eingesetzte Schraube in Ansicht.

Wenn in der nachstehenden Beschreibung von einer Schraube zur Verankerung eines Hohlprofils an einem Unterbau gesprochen wird, so können die Schraube, das Hohlprofil und der Unterbau natürlich auf verschiedenste Art und Weise beschaffen sein. Bei der Schraube sind die nachstehend noch zu erläuternden Merkmale vorzusehen, es können jedoch in gleicher Weise Kohlenstoffstähle oder rostfreie Stähle, aber auch andere Metalle, zur Fertigung der Schrauben herangezogen werden, wobei auch jede Art von Beschichtung möglich ist. Beim Hohlprofil geht es um ein Kunststoffhohlprofil, welches mit einem Metallprofil verstärkt ist. Im Wesentlichen wird ein Einsatz der erfindungsgemässen Schrauben bei der Befestigung von Fenster- oder Türrahmen in Gebäudeöffnungen sinnvoll sein. Genauso ist aber ein Einsatz bei der Befestigung von Wandelementen oder Verkleidungselementen an einem Unterbau möglich, wobei jedoch immer von zumindest im Befestigungsbereich vorgesehenen Kunststoffhohlprofilen mit einem eingesetzten Metallprofil ausgegangen wird. Beim Untergrund ist Holz, Beton und jede andere Variante möglich, wobei entweder ein direktes Einschrauben oder der Einsatz eines Dübels denkbar ist. Es wäre aber auch ein Untergrund aus Metall möglich, wobei dann ein entsprechendes Maschinengewinde für das Eindrehen der Schraube vorzusehen ist.

Eine Schraube 1 zur Verankerung eines Kunststoffhohlprofils 2 an einem Unterbau 3 besteht aus einem Schaft 4 mit einem an dessen Einschraubendbereich ausgebildeten Gewinde 5 und einem am anderen Ende ausgebildeten Kopf 6 mit einem Werkzeugangriff 7. Mit Abstand A von der Unterseite 8 des Schraubenkopfes 7 ist ein Anschlagbund 9 ausgebildet. Der Abstand A entspricht zumindest annähernd der Dicke D einer aufzunehmenden Profilwandung 10 des Kunststoffhohlprofils 2.

Der Anschlagbund 9 ist dabei aus wenigstens zwei Kegelabschnittkörpern 12 und 13 gebildet. Der in Richtung zum Schraubenkopf 6 weisende Kegelabschnittkörper 13 weist einen Winkel W1 grösser als 90° und der in Richtung zum Schraubenende sich verjüngende Kegelabschnittkörper 12 einen Winkel W2 kleiner als 90° auf. Beim gezeigten Ausführungsbeispiel weist der in Richtung zum Schraubenkopf 6 weisende Kegelabschnittkörper 13 des Anschlagbundes 9 einen Winkel W1 von etwa 120° und der in Richtung zum Schraubenende sich verjüngende Kegelabschnittkörper 12 des Anschlagbundes 9 einen Winkel W2 von etwa 70° auf.

Bei der erfindungsgemässen ist nun der Abstand A des Anschlagbundes 9 von der Unterseite 8 des Schraubenkopfes 6 zumindest annähernd der Dicke D einer aufzunehmenden Profilwandung 10 des Kunststoffhohlprofils 2 angepasst. Ferner ist ein zwischen dem mit einem Gewinde 5 versehenen Abschnitt C des Schaftes 4 und dem Anschlagbund 9 verbleibender Bereich B im Wesentlichen zylindrisch ausgeführt. Dieser Bereich B weist einen Durchmesser D1 grösser als der Kerndurchmesser DK des mit einem Gewinde 5 versehenden Abschnittes C des Schaftes 4 aufweist, wobei dieser Bereich B des Schaftes 4 in den Bohrungen 20, 21 der folgenden Wandungen 22 des Metallprofils 24 und/oder Wandungen 23 des Kunststoffhohlprofils 2 in einem Passsitz eingreift.

Der zwischen dem Schraubenkopf 6 und dem Anschlagbund 9 gebildete Einstich 25 ist im Durchmesser DE kleiner ist als der Durchmesser D1 des auf den Anschlagbund 9 folgenden Bereiches B. Ferner ist zwischen dem Anschlagbund 9 und dem anschliessenden zylindrischen Bereich B des Schaftes 4 ein weiterer Einstich 32 vorgesehen. Weiter kann hier der Übergang des zylindrischen Bereiches B in den Einstich 32 eine kegelstumpfförmige Erweiterung bilden, welche beim Aufweiten der Bohrung 26 in der Profilwandung 10 zusätzlich beihilft.

Der zylindrische Bereich B des Schaftes 4 kann zwei Abschnitte 34 und 35 aufweisen, welche verschiedenen Durchmessers D1 bzw. D2 haben. Der Abschnitt 34 mit dem grösseren Durchmesser D1 folgt auf den Anschlagbund 9 und der Abschnitt 35 mit dem kleineren Durchmesser D2 ist am Übergang zu dem mit dem Gewinde 5 versehenen Bereich C vorgesehen.

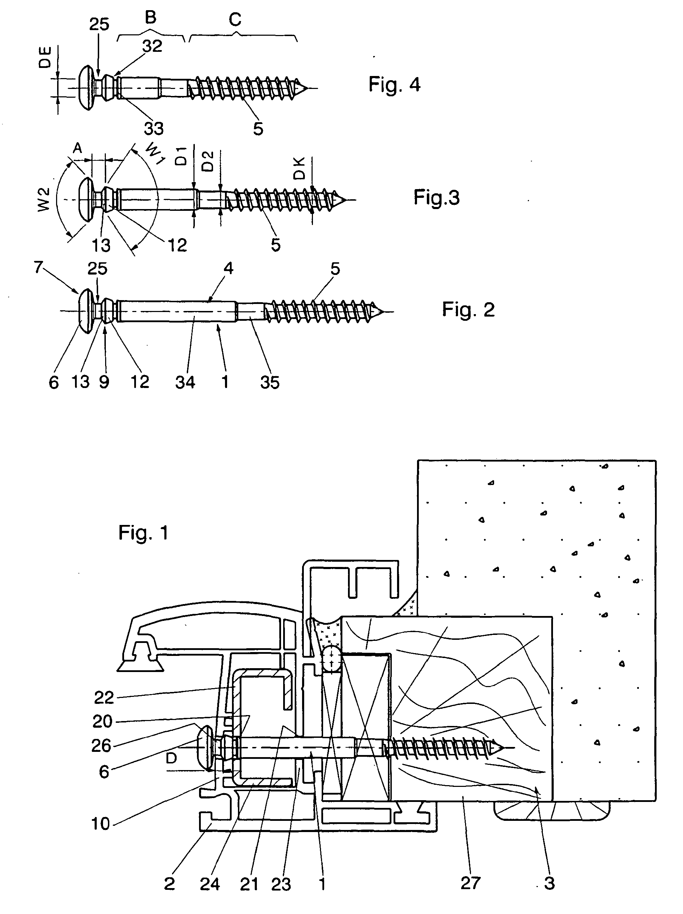

Wenn nun also, wie in der Fig. 1 dargestellt, die Schraube 1 nach dem Vorbohren des Kunststoffhohlprofils 2 und des eingesetzten verstärkenden Metallprofils 24 eingedreht wird, dann gelangt der Anschlagbund 9 an die Oberfläche der Wandung 10. Infolge des relativ spitzen Winkels W2 des Kegelabschnittkörpers 12 wird die Bohrung 26 im Kunststoffprofil 2 entsprechend elastisch aufgeweitet. Sobald der Anschlagbund 9 durch die Bohrung 26 hindurchgedrückt ist, kann der Anschlagbund 9 die Profilwandung 10 hintergreifen. Wenn nun die Schraube 1 weiter hineingedreht oder wieder herausgedreht wird, folgt das Kunststoffhohlprofil 2 entsprechend, so dass eine optimale Abstandsbefestigung möglich ist. Da der Bereich B der Schraube 1 passend in den Bohrungen 20 des Metallprofils 24 aufgenommen ist, ist auch eine optimale Halterung quer zur Achsrichtung der Schraube 1 gewährleistet. Bei der in den Fig. 1 bis 4 gezeigten Schraube 1 ist das Gewinde 5 als Holzschraubengewinde ausgeführt, wobei hier (Fig. 1) eine Befestigung in einen Stockrahmen 27 aus Holz erfolgt.

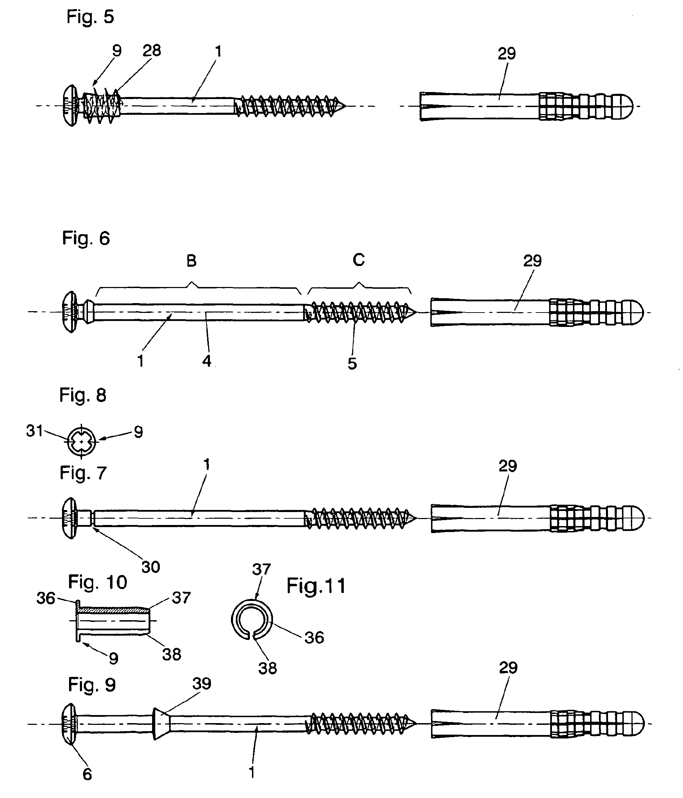

Bei der Ausgestaltung nach Fig. 5 ist der Anschlagbund 9 als kurzer Gewindeabschnitt 28 ausgebildet. Bei dieser Ausführung muss ein relativ grosser Abstand zwischen der Profilwandung 10 und der ersten Profilwandung 22 des Metallprofils 24 vorhanden sein, da ja der Gewindeabschnitt 28 nicht in das Metallprofil eingreifen darf.

Fig. 6 zeigt eine Ausführung, bei der ein relativ langer Bereich B des Schaftes vorhanden ist, wobei die Schraube 1 mit einem Dübel 29 zusammenwirkt. Eine solche Ausgestaltung ist für den Einsatz in einem Untergrund aus einem Mauerwerk oder aus Beton geeignet.

Die Fig. 8 und 9 zeigen eine Ausführung, bei der der Anschlagbund 9 von einem in eine Nut 30 eingesetzten Ring 31 gebildet ist.

Bei der Ausführungsvariante nach den Fig. 9 bis 11 wird der Anschlagbund 9 von einem kragenartigen Bund 36 einer auf den Schaft 4 der Schraube 1 aufgesetzten Hülse 37 gebildet. Die Hülse 37 weist einen durchgehenden Längsschlitz 38 zum federbelasteten Aufstecken derselben auf die Schraube 1 auf. Die Hülse 37 ist vorteilhaft aus Kunststoff gefertigt. Die Hülse 37 kann an ihrer Aussenoberfläche gerippt oder aufgerauht ausgebildet sein. Die Hülse 37 stützt sich mit ihrem dem kragenartigen Bund 36 abgewandten Ende auf einem nahe dem Beginn des Gewindeabschnittes C ausgebildeten Bund 39 ab.

Gerade beim Einsatz eines Dübels 29 für die Befestigung im Untergrund ist es vorteilhaft, wenn der Aussendurchmesser DD des Dübels 29 annähernd dem Durchmesser D1 des im Wesentlichen zylindrisch ausgeführten Bereiches B des Schaftes 4 bzw. des Abschnittes 34 mit dem grösseren Durchmesser D1 dieses Bereiches B angepasst ist.

Wenn infolge der im Querschnitt unterschiedlich grossen Kunststoffhohlprofile 2 verschieden lange Schrauben 1 benötigt werden, ist es vorteilhaft, wenn die Gewindeabschnitte C jeweils gleich lang ausgeführt sind und der zylindrische Bereich B des Schaftes 4 unterschiedliche Längen aufweist.

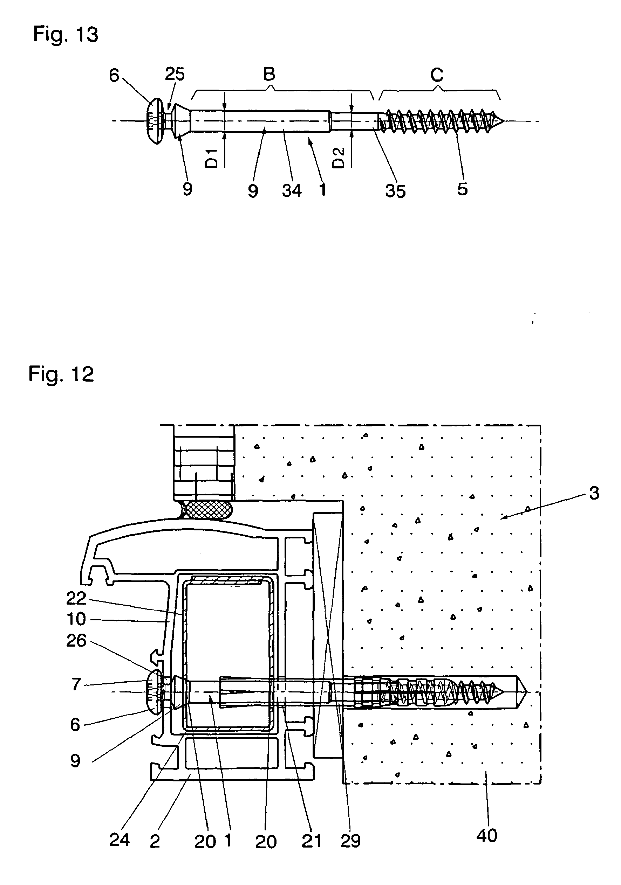

Bei der in Fig. 12 und 13 gezeigten Ausgestaltung wird im Wesentlichen die gleiche Schraube 1 eingesetzt wie in den Fig. 1 bis 4. Hier ist jedoch der Untergrund 40, an dem das Kunststoffhohlprofil 2 samt dem verstärkenden Metallprofil 24 befestigt werden soll, als Mauerwerk oder aus Beton gefertigt. Deshalb wird hier ein mit der Schraube 1 zusammenwirkender Dübel 29 eingesetzt.

## Patentansprüche

1. Schraube zur Verankerung eines mit einem Metallprofil verstärkten Kunststoffhohlprofils an einem Unterbau, welche einen Schaft mit einem an dessen Einschraubendbereich ausgebildeten Gewinde und einem am anderen Ende ausgebildeten Kopf mit einem Werkzeugangriff aufweist, wobei mit Abstand von der Unterseite des Schraubenkopfes ein Anschlagbund ausgebildet ist, **dadurch gekennzeichnet, dass** der Abstand (A) des Anschlagbundes (9) von der Unterseite (8) des Schraubenkopfes (6) zumindest annähernd der Dicke (D) einer aufzunehmenden Profilwandung (10) des Kunststoffhohlprofils (2) entspricht, und dass ein zwischen dem mit einem Gewinde (5) versehenen Abschnitt (C) des Schaftes (4) und dem Anschlagbund (9) verbleibender Bereich (B) im Wesentlichen zylindrisch ausgeführt ist und einen Durchmesser (D1) grösser als der Kerndurchmesser (DK) des mit einem Gewinde (5) versehenden Schaftes aufweist, wobei dieser Bereich (B) des Schaftes (4) in den Bohrungen (20,21) der folgenden Wandungen (22,23) des Metallprofils (24) und/oder des Kunststoffhohlprofils (2) in einem Passsitz eingreifen.

2. Schraube nach Anspruch 1, **dadurch gekennzeichnet, dass** der Anschlagbund (9) aus wenigstens zwei Kegelabschnittkörpern (12,13) gebildet ist, wobei der in Richtung zum Schraubenkopf (6) weisende Kegelabschnittkörper (13) einen Winkel grösser als 90° und der in Richtung zum Schraubenende sich verjüngende Kegelabschnittkörper (12) einen Winkel kleiner als 90° aufweist.

3. Schraube nach Anspruch 2, **dadurch gekennzeichnet, dass** der in Richtung zum Schraubenkopf (6) weisende Kegelabschnittkörper (13) des Anschlagbundes (9) einen Winkel (W1) von etwa 120° und der in Richtung zum Schraubenende sich verjüngende Kegelabschnittkörper (12) des Anschlagbundes (9) einen Winkel (W2) von etwa 70° aufweist.

4. Schraube nach Anspruch 1 und/oder den Ansprüchen 2 und 3, **dadurch gekennzeichnet, dass** ein zwischen dem Schraubenkopf (6) und dem Anschlagbund (9) gebildeter Einstich (25) im Durchmesser (DE) kleiner ist als der Durchmesser (D1) des auf den Anschlagbund (9) folgenden Bereiches (B).

5. Schraube nach Anspruch 1, **dadurch gekennzeichnet, dass** der Anschlagbund (9) als kurzer Gewindeabschnitt (28) ausgebildet ist.

6. Schraube nach Anspruch 1, **dadurch gekennzeichnet, dass** der Anschlagbund (9) von einem in eine Nut (30) eingesetzten Ring (31) gebildet ist.

7. Schraube nach Anspruch 1 und einem der vorstehenden Ansprüche, **dadurch gekennzeichnet, dass** zwischen dem Anschlagbund (9) und dem anschliessenden zylindrischen Bereich (B) des Schaftes (4) ein weiterer Einstich (32) vorgesehen ist.

8. Schraube nach Anspruch 1, **dadurch gekennzeichnet, dass** der zylindrische Bereich (B) des Schaftes (4) zwei Abschnitte (34,35) verschiedenen Durchmessers (D1,D2) aufweist, wobei der Abschnitt (34) mit dem grösseren Durchmesser (D1) auf den Anschlagbund (9) folgt und der Abschnitt (35) mit dem kleineren Durchmesser (D2) am Übergang zu dem mit dem Gewinde (5) versehenen Abschnitt (C) vorgesehen ist.

9. Schraube nach Anspruch 1, **dadurch gekennzeichnet, dass** der Anschlagbund (9) von einem kragenartigen Bund (36) einer auf den Schaft (4) der Schraube (1) aufgesetzten Hülse (37) gebildet ist.

10. Schraube nach Anspruch 9, **dadurch gekennzeichnet, dass** die Hülse (37) einen durchgehenden Längsschlitz (38) zum federbelasteten Aufstecken derselben auf die Schraube (1) aufweist.

11. Schraube nach den Ansprüchen 9 und 10, **dadurch gekennzeichnet, dass** die Hülse (37) aus Kunststoff gefertigt ist.

12. Schraube nach einem der Ansprüche 9 bis 11, **dadurch gekennzeichnet, dass** die Hülse (37) an ihrer Aussenoberfläche gerippt oder aufgerauht ausgebildet ist.

13. Schraube nach den Ansprüchen 9 bis 12, **dadurch gekennzeichnet, dass** die Hülse (37) mit ihrem dem kragenartigen Bund (36) abgewandten Ende auf einem nahe dem Beginn des Gewindeabschnittes ausgebildeten Bund (39) abgestützt ist.

14. Schraube nach einem der Ansprüche 1 bis 13, **dadurch gekennzeichnet, dass** der Gewindeabschnitt (5) mit einem Holzschraubengewinde ausgebildet ist.

15. Schraube nach einem der Ansprüche 1 bis 13, **dadurch gekennzeichnet, dass** die Schraube (1) in einen Dübel (29) eingedreht ist.

16. Schraube nach Anspruch 14 und 15, **dadurch gekennzeichnet, dass** der Aussendurchmesser (DD) des Dübels (29) annähernd dem Durchmesser (D1) des im Wesentlichen zylindrisch ausgeführten Bereiches (B) des Schaftes (4) bzw. des Abschnittes (34) mit dem grösseren Durchmesser (D1) dieses Bereiches (B) angepasst ist.

17. Schraube nach den vorstehenden Ansprüchen, **dadurch gekennzeichnet, dass** bei unterschiedlich langen Schrauben (1) die Gewindeabschnitte (5) jeweils gleich lang ausgeführt sind und der zylindrische Bereich (B) des Schaftes (4) unterschiedliche Längen aufweist.

## Claims

1. A screw for anchoring to a substructure a plastics hollow profile reinforced with a metal profile, which has a shank with a screw-thread formed on its screwing-in end portion and with a head having a tool engagement portion formed at the other end, wherein a stop shoulder is formed at a distance from the underside of the screw head, **characterised in that** the distance (A) of the stop shoulder (9) from the underside (8) of the screw head (6) corresponds at least approximately to the thickness (D) of a profile wall (10) of the plastics hollow profile (2) to be accommodated, and **in that** a portion (C) of the shank (4) provided with a screw-thread (5) and the portion (B) remaining up to the stop shoulder (9) is of substantially cylindrical shape and has a diameter (D1) which is larger than the root diameter (DK) of the shank provided with a screw-thread (5), wherein this portion (B) of the shank (4) engages into the bores (20,21) of the succeeding walls (22,23) of the metal profile (24) and/or of the plastics hollow profile (2) with an interference fit.

2. A screw according to Claim 1, **characterised in that** the stop shoulder (9) is formed from at least two conical portion bodies (12,13), wherein the conical portion body (13) facing towards the screw head (6) has an angle greater than 90° and the conical portion body (12) tapering towards the screw end has an angle of less than 90°.

3. A screw according to Claim 2, **characterised in that** the conical portion body (13) of the stop shoulder (9) facing towards the screw head (6) has an angle (W1) of approximately 120° and the conical portion body (12) of the stop shoulder (9) tapering towards the screw end has an angle (W2) of approximately 70°.

4. A screw according to Claim 1 and/or Claims 2 and 3, **characterised in that** a recess (25) formed between the screw head (6) and the stop shoulder (9) is smaller in diameter (DE) than the diameter (D1) of the portion (B) following the stop shoulder (9).

5. A screw according to Claim 1, **characterised in that** the stop shoulder (9) is in the form of a short threaded portion (28).

6. A screw according to Claim 1, **characterised in that** the stop shoulder (9) is formed by a ring (31) inserted into a groove (30).

7. A screw according to Claim 1 and any one of the preceding Claims, **characterised in that** a further recess (32) is provided between the stop shoulder (9) and the adjoining cylindrical portion (B) of the shank (4).

8. A screw according to Claim 1, **characterised in that** the cylindrical portion (B) of the shank (4) has two portions (34,35) of different diameter (D1,D2), wherein the portion (34) with the larger diameter (D1) follows the stop shoulder (9) and the portion (35) with the smaller diameter (D2) is provided at the transition with the portion (C) provided with the screw-thread (5).

9. A screw according to Claim 1, **characterised in that** the stop shoulder (9) is formed by a collar-like flange (36) of a sleeve (37) mounted on the shank (4) of the screw (1).

10. A screw according to Claim 9, **characterised in that** the sleeve (37) has a continuous longitudinal slit (38) for the spring-loaded fitting thereof on to the screw (1).

11. A screw according to Claim 9 and 10, **characterised in that** the sleeve (37) is made from plastics material.

12. A screw according to any one of Claims 9 and 11, **characterised in that** the sleeve (37) is of ribbed or roughened form on its outer surface.

13. A screw according to any one of Claims 9 and 12, **characterised in that** the sleeve (37) is supported at its end remote from the collar-like flange (36) on a shoulder (39) formed near the start of the threaded portion.

14. A screw according to any one of Claims 1 to 13, **characterised in that** the threaded portion (5) is formed with a wood-screw thread.

15. A screw according to any one of Claims 1 to 13, **characterised in that** the screw (1) is screwed into a dowel (29).

16. A screw according to Claims 14 and 15, **characterised in that** the outer diameter (DD) of the dowel (29) is adapted approximately to the diameter (D1) of the substantially cylindrically formed portion (B) of the shank (4) or of the portion (34) with the larger diameter (D1) of this portion (B).

17. A screw according to any one of the preceding Claims, **characterised in that** with screws (1) of different length the threaded portions (5) are each of the same length and the cylindrical portion (B) of the shank (4) is of different lengths.

## Revendications

1. Vis pour ancrer un profil creux en matière plastique, renforcé par un profil en métal, à une structure de support, cette vis comportant une tige avec un filetage réalisé dans sa zone de vissage et une tête à une autre extrémité avec une empreinte d'outil, et une collerette de butée à une distance de la face inférieure de la tête de vis,
**caractérisée en ce que**
la distance (A) de la collerette de butée (9) par rapport à la face inférieure (8) de la tête de vis (6) correspond au moins sensiblement à l'épaisseur (D) d'une paroi (10) du profil en matière plastique (2) à recevoir, et
la zone (B) qui subsiste entre le segment (C) de la tige (4) munie du filetage (5) et la collerette de butée (9) est pratiquement cylindrique et a un diamètre (D1) supérieur au diamètre de base (DK) de la tige munie du filetage (5),
cette zone (B) de la tige (4) pénétrant avec un ajustage pressé dans les perçages (20, 21) des parois suivantes (22, 23) du profil métallique (24) et/ou du profil creux en matière plastique (2).

2. Vis selon la revendication 1,
**caractérisée en ce que**
la collerette de butée (9) est formée par au moins deux corps à section en tronc de cône (12, 13), le corps en tronc de cône (13) dirigé vers la tête de vis (6) ayant un angle supérieur à 90° et le corps en tronc de cône (12) qui va en diminuant en direction de l'extrémité de la vis, présente un angle inférieur à 90°.

3. Vis selon la revendication 2,
**caractérisée en ce que**
le corps en tronc de cône (13) dirigé vers la tête de vis (6) de la collerette de butée (9) a un angle (W1) d'environ 120° et le corps en tronc de cône (12) allant en diminuant vers l'extrémité de la vis de la collerette de butée (9) correspond à un angle (W2) d'environ 70°.

4. Vis selon la revendication 1, ou les revendications 2 et 3,
**caractérisée par**
une gorge (25) réalisée entre la tête de vis (6) et la collerette de butée (9) à un diamètre (DE) inférieur au diamètre (D1) de la zone (B) qui suit la collerette de butée (9).

5. Vis selon la revendication 1,
**caractérisée en ce que**
la collerette de butée (9) est réalisée sous la forme d'un court segment fileté (28).

6. Vis selon la revendication 1,
**caractérisée en ce que**
la collerette de butée (9) est formée par un anneau (31) logé dans une rainure (30).

7. Vis selon la revendication 1, et l'une quelconque des revendications suivantes,
**caractérisée en ce qu'**
une autre gorge (32) est prévue entre la collerette de butée (9) et la zone cylindrique adjacente (B) de la tige (4).

8. Vis selon la revendication 1,
**caractérisée en ce que**
la zone cylindrique (B) de la tige (4) comporte deux segments (34, 35) de diamètres différents (D1, D2), le segment (34) de plus grand diamètre (D1) faisant suite à la collerette de butée (9) et le segment (35) de diamètre (D2) plus petit se trouvant à la jonction avec le segment (C) muni du filetage (5).

9. Vis selon la revendication 1,
**caractérisée en ce que**
la collerette de butée (9) est constituée par une collerette (36) en forme de collier d'un manchon (37) rapporté sur la tige (4) de la vis (1).

10. Vis selon la revendication 9,
**caractérisée en ce que**
le manchon (37) comporte une fente longitudinale (38), continue, pour être engagé avec effet de ressort sur la vis (1).

11. Vis selon l'une quelconque des revendications 9 et 10,
**caractérisée en ce que**
le manchon (37) est fabriqué en matière plastique.

12. Vis selon l'une quelconque des revendications 9 à 11,
**caractérisée en ce que**
la surface extérieure du manchon (37) est nervurée ou rendue rugueuse.

13. Vis selon l'une quelconque des revendications 9 à 12,
**caractérisée en ce que**
l'extrémité du manchon (37) à l'opposé de la collerette (36) en forme de collier s'appuie contre une collerette (39) réalisée à proximité du début du segment fileté.

14. Vis selon l'une quelconque des revendications 1 à 13,
**caractérisée en ce que**
le segment fileté (5) a un filetage de vis à bois.

15. Vis selon l'une quelconque des revendications 1 à 13,
**caractérisée en ce que**
la vis (1) se place dans une cheville (29).

16. Vis selon l'une quelconque des revendications 14 et 15,
**caractérisée en ce que**
le diamètre extérieur (DD) de la cheville (29) est adapté sensiblement au diamètre (D1) de la zone (B) de la tige (4) pratiquement cylindrique ou du segment (34) de plus grand diamètre (D1) de cette zone (B).

17. Vis selon l'une quelconque des revendications précédentes,
**caractérisée en ce que**
pour des vis (1) de longueurs différentes, les segments filetés (5) ont chaque fois la même longueur et la zone cylindrique (B) de la tige (4) présente des longueurs différentes.
